# EUROPEAN PATENT APPLICATION

(11) **EP 1 939 617 A1**
(43) Date of publication of application: **02.07.2008**
(21) Application number: 06807961.5
(22) Date of filing: 11.10.2006
(51) Int. Cl.: G01N 30/72, G01N 31/12

(54) **ABSOLUTE METHOD FOR THE QUANTIFICATION OF ORGANIC COMPOUNDS**

(30) Priority: 11.10.2005 ES 200502590
(71) Applicant: UNIVERSIDAD DE OVIEDO, 33003 Oviedo (ES)
(72) Inventor: RUIZ ENCINAR, Jorge, E-33006 Oviedo (ES); GARCIA ALONSO, José Ignacio, E-33006 Oviedo (ES)
(74) Representative: Pons Arino, Angel
(86) International application number: PCT/ES2006/070153
(87) International publication number: WO 2007/042597

(57) **Abstract**

The invention relates to the quantification of organic compounds originating from a chromatographic system that does not involve the use of patterns, comprising the continuous conversion of the carbon of said compounds into carbon dioxide (CO2) involving a chemical reaction and the mixing of same, before or after separation, with a known, constant flow of a carbon compound, preferably CO2, which is enriched with carbon isotope-13 (¹³C). The mixture is introduced into a mass spectrometer in which the isotopic ratio ¹²C/¹³C is continuously measured either in the carbon or in any characteristic ion originating from same. Said isotopic ratio is converted into a carbon mass flow measurement using in-line isotopic dilution.

## Description

This invention relates to the field of Instrumental Analytical Chemistry and, more specifically, relates to methods of determining organic compounds using chromatographic separation systems, without the need to calibrate the instrumental response of the specific equipment for each compound, and its application would encompass sectors such as the environmental sector and control of industrial processes.

### PRIOR ART

When it is desired to determine the content of one or several organic compounds in any sample arriving at an analysis laboratory, the following steps are generally followed:
a) If the sample is solid, the organic compounds to be determined are dissolved or lixiviated in a suitable solvent. In the case of liquid samples, all that is required is extraction of the organic compounds into a suitable solvent. At this time, or later, some type of internal standard could be added to the sample in order to correct subsequent methodological errors. These internal standards may be: i) a compound different from those that are to be determined and which is not present in the sample (internal standard method), ii) one or several of the compounds to be determined wherein the isotopic abundance of any of the elements present in the compound has been altered (isotope dilution method), or iii) one or several of the compounds to be determined, but without modifying the natural isotopic abundances (standard addition method). When the sample is liquid, the internal standard may be added directly onto the sample.
b) Once the compounds have been extracted from the solid, or when the sample is liquid, a process of pre-concentration or separation of other interfering compounds by means of non-chromatographic techniques may be necessary, the yield whereof must be determined.
c) Finally, the prepared sample is injected into a chromatography system in order to separate the different organic compounds present and detect them by means of a suitable instrumental device.
d) The signal, in peak area or peak height, is compared to a calibration line prepared from pure standards for each compound to be determined, since the instrument signal is different for each compound. This calibration makes it possible to determine the content of the organic compound in the injected sample. It is worth noting that this step of the analysis is, without a doubt, the costliest in the process, since certified standards are expensive and each compound present in the sample requires independent calibration, which requires time and money.
e) If some type of internal standard, amongst those described above, has been used, the quantification methodologies differ slightly.

Isotope dilution is a classical elemental determination technique described over fifty years ago. It is based on the deliberate alteration of the isotopic abundance of an element in the sample by the addition of a known quantity of the same element with an altered isotopic abundance (tracer) and measurement of the final isotopic abundance in the mixture by means of Mass Spectrometry.

This principle may be applied to the determination of the quantity of an element eluted from a chromatography system using on-line isotope dilution, the basic principle whereof has already been described in various publications [(1) to (5)]. The sample and the tracer are continuously mixed (in flow) following chromatographic separation and the isotope ratio in the mixture, Rm, is measured as a function of time by means of Mass Spectrometry. If the tracer input to the mixture is kept constant over time, the isotope ratio measured in the mixture (Rm) will depend solely on the element to be analysed in the sample, which may be constant or variable.

When on-line isotope dilution is used for elemental analysis following a chromatographic separation, it is essential for isotopic equilibrium to exist between the compounds eluted from the chromatography column and the chemical compound used as a tracer, which contains the isotopically-enriched element.

The achievement of this isotopic equilibrium has been described in the state of the art using inductively-coupled plasma as the ionisation source, since it is capable of breaking all the chemical bonds, in both the compounds from the chromatography column and the chemical compound containing the tracer [(1) to (5)]. Therefore, the effectiveness of the ionisation process will be independent from the nature of the chemical compound containing the analyte or the enriched tracer. For the determination of organic compounds by on-line isotope dilution, there is a publication in the state of the art that describes the use of inductively-coupled plasma as the ionisation source and ¹³C-labelled benzoic acid as the tracer (6). This ionisation source is not the most suitable for determining carbon, due to the low yield of the ionisation process for this element and potential contamination by atmospheric carbon.

### DETAILED DESCRIPTION OF THE INVENTION

The authors of this invention provide a method of quantifying organic compounds that eliminates and/or simplifies some of the steps known in the state of the art in an absolute determination method for organic compounds.

"Absolute determination" or "absolute method" is understood to mean any determination or method performed without calibration, that is, without the need to use pure standards for each compound to be analysed.

One aspect of this invention provides a method of quantifying organic compounds which comprises the following steps:
a. separating the compounds in the sample by means of chromatography;
b. the compounds separated in (a) are mixed with a tracer enriched in carbon-13;
c. the mixtures in section (b) chemically react, to produce C2;
d. measuring the isotope ratio of ¹²C/¹³C generated in (c) by means of a mass spectrometer;
e. converting the ¹²C/¹³C isotope ratio chromatogram into a carbon mass flow chromatogram by means of the on-line isotope dilution equation;
where, if the tracer is CO2 enriched in carbon-13, mixing with said tracer may also be performed subsequent to the chemical reaction of the compounds separated in (a).

The method of this invention comprises a chemical reaction capable of quantitatively converting the carbon present in each organic compound eluted from the chromatography column into carbon dioxide (CO2) as a means to achieve isotopic equilibrium. Where said chemical reactions may be:
a) a gas-phase combustion reaction using oxygen, oxygen-argon or oxygen-hydrogen mixtures;
b) a solid-phase oxidation reaction using metallic oxides (CuO, Ag20 or others) in the presence of catalysts; or
c) a liquid-phase oxidation reaction using strong oxidants (permanganate, dichromate, persulfate or others).

The carbon dioxide obtained from the chemical reaction of each organic compound in the sample is continuously mixed with a carbon-13-enriched tracer prior to being introduced into the ionisation source of the Mass Spectrometer for on-line isotope dilution analysis.

The method of this invention to introduce the carbon isotopically labelled with ¹³C and perform the on-line isotope dilution comprises three equally valid alternative routes:
a) Introducing the tracer directly, as carbon dioxide enriched in ¹³C.
b) Introducing the tracer as another carbon compound (organic or inorganic, such as, for example, sodium carbonate) enriched in ¹³C dissolved in a liquid phase.
c) Introducing the tracer as another volatile carbon compound enriched in ¹³C, such as, for example, methane.

In the first case, that is, using CO2 enriched in ¹³C as the tracer, the latter may be introduced into the chromatography system at any time (in the mobile phase, following the column or following the chemical reaction), whereas in the second and third cases, that is, when the tracer is a carbon compound other than CO2, it must always be introduced prior to the chemical reaction in order to also convert the compound used as the tracer into CO2 enriched in ¹³C.

In a preferred embodiment of the method of this invention, the mixture obtained, which is a mixture of the organic compound to be analysed and the tracer, is continuously introduced into a Mass Spectrometer in order to measure the carbon isotope ratio, ¹²C/¹³C, thus obtaining the mass flow chromatogram.

The input of the element into the mixture from the sample varies with time due to chromatographic separation and, therefore, the isotope dilution equations are modified by entering the mass flow of the element as the unknown variable [(1) to (5)]. The representation of the mass flow as a function of time will be the so-called mass flow chromatogram. The integration of each chromatographic peak provides an absolute measurement of the mass of the element in said peak. The concentration in the original sample may be calculated if we know the mass (or the volume) of sample injected into the chromatography system [(1) to (5)].

Measurement of the ¹²C/¹³C isotope ratio may be performed, depending on the ionisation source used, both in the monopositive ions of carbon with masses 12 and 13 and in other ions derived therefrom, such as, for example, in CO2⁺ with masses 44 and 45, respectively.

The method developed in this invention makes it possible to achieve isotopic equilibrium between the compounds eluted from the chromatography column and the isotopically-enriched tracer prior to introduction into the ionisation source. The achievement of this prior isotopic equilibrium makes it possible to choose the most suitable ionisation source for the analysis of organic compounds, which could operate in high vacuum, thus providing greater sensitivity and lower carbon contaminations, which would translate into better detection limits for organic compounds.

Therefore, this invention provides a high-sensitivity, high-precision absolute determination method for organic compounds using on-line isotope dilution, through the continuous measurement of the ¹²C/¹³C isotope ratio at the outlet of a chromatography system using ionisation sources other than inductively-coupled plasma.

The absolute quantification method for organic compounds of this invention entails, with respect to the quantification methodologies for organic compounds described in the prior state of the art, the following advantages:
a) It is a universal method that could be used for any organic compound regardless of its chemical form, since the carbon present in any organic compound is susceptible to being quantitatively converted into CO2 by means of one of the chemical reactions described above.
b) It is an absolute method that does not require using calibration standards for each compound to be determined, which significantly reduces the cost and the time required for analysis in routine laboratories. In fact, it would allow for the absolute quantification of any carbon-containing compound in the sample eluted from the chromatography system, with a single injection and without the need for any standard whatsoever.
c) It uses isotope dilution and, therefore, it may be considered to be a primary analysis method that may be directly traceable to the International System of Units.
d) It requires minimal modification of current chromatography systems in order to introduce the chemical reaction and the flow of enriched carbon 13.
e) It uses low-cost Mass Spectrometers, since high precisions are not required when measuring the isotope ratios.
f) It makes it possible to use internal standards to correct methodological errors during preparation of the sample, variations in the volume injected or variations in volume due to evaporation of the solvent, since this methodology makes it possible to also absolutely determine the quantity of internal standard injected.

Another aspect of this invention is the application of the method described, in both liquid-chromatography separations and gas-chromatography separations, in environmental assay laboratories and industrial process control laboratories where routine determinations of organic compounds with known chemical structures are performed by means of chromatographic techniques.

Specifically, the determination of aliphatic hydrocarbons in various types of samples, of aromatic hydrocarbons, pesticides, organochlorated compounds, etc. would be feasible with this invention. Therefore, one of the most immediate fields of application is environmental analysis of organic pollutants in assay laboratories. A second important field of application would be in the quality control of industrial and pharmaceutical products and the control of chemical processes, which are normally conducted in laboratories in the production plants themselves.

Other fields of application, within Analytical Chemistry, could be the optimisation and study of sample preparation processes (liquid-liquid extraction, solid-liquid extraction, solid-phase microextraction, etc.), since the absolute quantification performed with this method may be used to study and optimise this process in a highly reliable manner. A specific case is the selection and use of internal standards to correct errors in separation processes.

From an instrumental standpoint, this invention can be incorporated into chromatography equipment that uses Mass Spectrometry as the detection system (simple GC-MS or HPLCMS equipment) and, therefore, consists of an instrumental modification susceptible to being commercialised by analytical instrumentation companies.

This modified equipment would make it possible to perform routine analyses of organic compounds with high precision and accuracy, at a low cost for laboratories and in a considerably shorter period of time than with traditional external calibration and standard addition methods.

Throughout the description and the claims, the word "comprises" and its variants are not intended to exclude other technical characteristics, components or steps. For those skilled in the art, other objects, advantages and characteristics of the invention will emerge partly from the description and partly from the practise of the invention. The following examples and drawings are provided for illustrative purposes and are not intended to limit this invention.

### BRIEF DESCRIPTION OF THE FIGURES

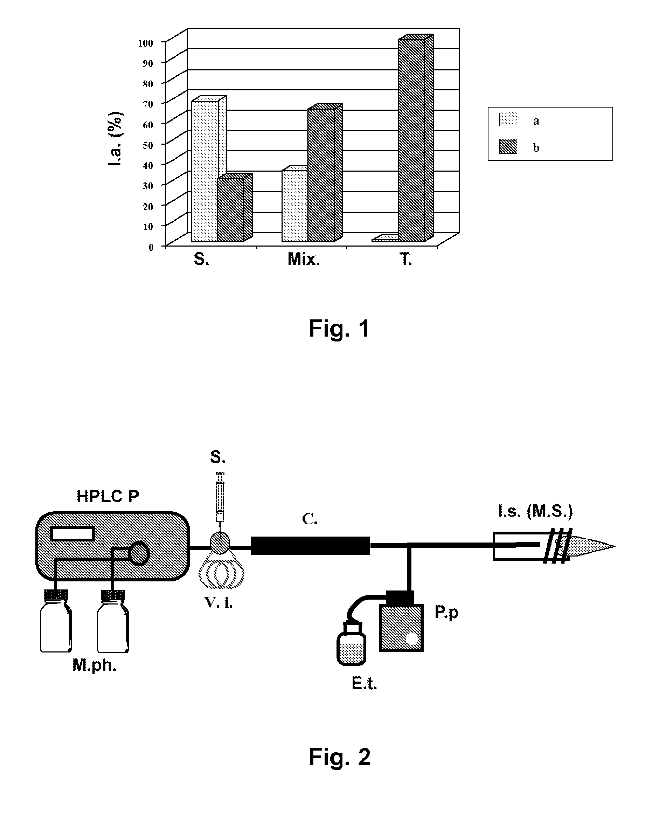

Fig. 1.- Illustration of the basic principle of isotope dilution analysis. Where: "I. a." is isotopic abundance; "S" is sample; "Mix." is mixture; "T" is tracer; "a" is isotope a; and "b" is isotope b.
Fig. 2.- Illustration of the principle of on-line isotope dilution for a liquid chromatography system. Where: "HPLC P." is HPLC pump; "M. ph." are mobile phases; "S." is syringe; "I.v." is injection valve; "C." is column; "E.t." is enriched tracer; "P.p." is peristaltic pump; and "I.s. (M.S.)" is the ionisation source of the Mass Spectrometer.

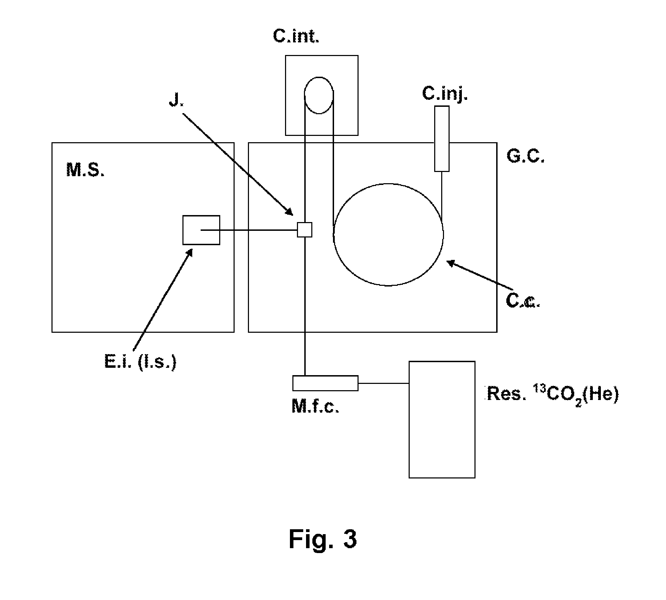

Fig. 3.- Diagram of a preferred embodiment in Gas Chromatography. Where: "C.int." is combustion interface; "C.inj." Is chromatography injector; "C.G." is Gas Chromatography; "J" is joint; "M.S." is Mass Spectrometer; "(E.i.) I.s." is electronic-impact ionisation source; "C.c." is chromatography column; "M.f.c." is mass flow controller; and "Res. ¹³CO2 (He)" is reservoir of CO2 enriched in ¹³C.

### EXPLANATION OF A PREFERRED EMBODIMENT

For a better understanding of the method described in this invention, we will explain the procedure to be followed in order to determine organic compounds by Gas Chromatography using a quadrupole Mass Spectrometer with an electronic-impact ionisation source.

The basic principle of isotope dilution analysis is illustrated in Figure 1 for an element having two isotopes: a and b. As can be observed, isotope a is the most abundant in the sample, whilst the tracer is enriched in isotope b. The isotopic abundance in the sample will be a linear combination of the abundances in the sample and the tracer, which will depend on the quantity of the element present in the sample and the quantity of tracer added. Measurement of the isotope ratio, Rm, in the sample (isotope a / isotope b) makes it possible to determine the quantity of the element in the original sample.

This basic principle may be applied to the determination of the quantity of an element eluted from a chromatography system using on-line isotope dilution, the basic principle whereof is illustrated in Figure 2 for a liquid chromatography system. As can be observed in Figure 2, the sample and the tracer are continuously mixed (in flow) following chromatographic separation and the isotope ratio in the mixture, Rm, is measured as a function of time by means of Mass Spectrometry.

The carbon dioxide enriched in ¹³C was prepared dissolved in pressurised Helium. The container with the tracer had an output opening and the gas flow was controlled by means of a mass flow controller that exactly regulated the flow of tracer added to the mixture. On the other hand, a combustion interface was installed at the outlet of the chromatography column, consisting of a ceramic tube wherein copper threads, previously oxidised to CuO in an air current, were introduced and maintained at a suitable temperature (> 850°C) in order for the following generic reaction to take place quantitatively:

**CnH2n⁺2 + (3n+1)CuO -> nC02 + (n+1) H20 + (3n+1)Cu**

where CnH2n⁺2 was any aliphatic hydrocarbon.

Any organic compound would produce the previous reaction quantitatively, being converted into carbon dioxide, water and, in the presence of heteroatoms, other reaction products (N02, S02, etc).

The flow of ¹³C-labelled carbon dioxide was added at the outlet of the combustion interface and the mixture thus generated was introduced, through a fused silica tube, into the ionisation source of a Mass Spectrometer.

Using an electronic-impact ionisation source, it was possible to measure the carbon isotope ratios in the CO2⁺ molecular ion with masses 44 (for carbon 12) and 45 (for carbon 13). The measured isotope ratio was converted into a ¹²C/¹³C isotope ratio by taking into account oxygen's natural isotopic abundances.

This isotope ratio was inserted into the on-line isotope dilution equation (1) to obtain the mass flow chromatogram and directly determine the carbon mass in each chromatographic peak following the corresponding integration. A general diagram of this embodiment is shown in Figure 3.

### BIBLIOGRAPHICAL REFERENCES

(1) "Isotope dilution analysis for trace element speciation. A tutorial review". Rodriguez González, P; Marchante Gayón, JM; Garcia Alonso, JI; Sanz Medel, A. SPECTROCHIMICA ACTA PART B-ATOMIC 10 SPECTROSCOPY, 2005, 60 (2): 151-207.
(2) "Isotope-dilution mass spectrometry". Heumann, KG. INTERNATIONAL JOURNAL OF MASS SPECTROMETRY AND ION PROCESSES, 1992, 118:575-592.
(3) "Speciation of essential elements in human serum using anion-exchange chromatography coupled to post-column isotope dilution analysis with double focusing ICP-MS". Muñiz, CS, Marchante Gayón, JM; Garcia Alonso, JI; Sanz Medel, A. JOURNAL OF ANALYTICAL ATOMIC SPECTROSCOPY, 2001, 16 (6): 587-592.
(4) "Quantitative speciation of selenium in human serum by affinity chromatography coupled to post-column isotope dilution analysis ICP-MS". Reyes, LH, Marchante-Gayón, JM, Garcia Alonso, Jl; Sanz Medel, A. JOURNAL OF ANALYTICAL ATOMIC SPECTROSCOPY, 2003, 18 (10):1210-1216.
(5) "Determination of cadmium in biological and environmental materials by isotope dilution inductively coupled plasma mass spectrometry: Effect of flow sample introduction methods". Mota, JPV, De la Campa, MRF, Garcia Alonso, Jl; Sanz Medel, A. JOURNAL OF ANALYTICAL ATOMIC SPECTROSCOPY, 1999, 14 (2): 113-120.
(6) "Development of an ICP-IDMS method for dissolved organic carbon determinations and its application to chromatographic fractions of heavy metal complexes with humic substances". Vogl, J; Heumann, KG. ANALYTICAL CHEMISTRY, 1998, 70 (10): 2038-2043.

## Claims

1. Quantification method for organic compounds which comprises:
a. separating the compounds in the sample by means of chromatography;
b. the compounds separated in (a) are mixed with a tracer enriched in carbon-13;
c. the mixtures in section (b) chemically react, to produce CO2;
d. measuring the isotope ratio of ¹²C/¹³C generated in (c) by means of a mass spectrometer;
e. converting the ¹²C/¹³C isotope ratio chromatogram into a carbon mass flow chromatogram by means of the on-line isotope dilution equation;
wherein, if the tracer is CO2 enriched in carbon-13, mixing with said tracer may also be performed subsequent to the chemical reaction of the compounds separated in (a).

2. Method, according to claim 1, where the tracer is a carbon compound.

3. Method, according to claim 2, where the tracer is sodium carbonate.

4. Method, according to claim 2, where the tracer is a volatile carbon compound.

5. Method, according to claim 4, where the tracer is methane.

6. Method, according to any of the preceding claims, where the separation is performed by means of liquid chromatography or gas chromatography.

7. Method, according to any of the claims 1 to 6, where the ¹²C/¹³C isotope ratio is measured directly.

8. Method, according to any of the claims 1 to 6, where the isotope ratio is measured by means of ions derived from ¹²C and ¹³C.

9. Method, according to the preceding claim, where the ions derived from the ¹²C/¹³C ratio are CO2⁺ with masses 44 and 45, respectively.

10. Method, according to any of the preceding claims, where the ionisation source of the mass spectrometer is an electronic-impact ionisation source.
